(19) Europäisches Patentamt
European Patent Office
Office européen des brevets

(11) EP 1 724 307 A1

(12) **EUROPEAN PATENT APPLICATION**
published in accordance with Art. 158(3) EPC

(43) Date of publication:
**22.11.2006 Bulletin 2006/47**

(21) Application number: **05720413.3**

(22) Date of filing: **03.03.2005**

(51) Int Cl.:
***C08L 67/02*** *(2006.01)* ***C08K 9/04*** *(2006.01)*
***D01F 6/92*** *(2006.01)*

(86) International application number:
**PCT/JP2005/004142**

(87) International publication number:
**WO 2005/085349 (15.09.2005 Gazette 2005/37)**

(84) Designated Contracting States:
**AT BE BG CH CY CZ DE DK EE ES FI FR GB GR HU IE IS IT LI LT LU MC NL PL PT RO SE SI SK TR**

(30) Priority: **05.03.2004 JP 2004062107**
**06.07.2004 JP 2004198970**

(71) Applicant: **TEIJIN LIMITED**
**Osaka-shi,**
**Osaka 541-0054 (JP)**

(72) Inventors:
- **KOHNO, Kazuteru,**
**c/o Teijin Limited,**
**Iwakuni-shi,**
**Yamaguchi 7400014 (JP)**
- **KIDO, Nobuaki,**
**c/o Teijin Limited,**
**Iwakuni-shi,**
**Yamaguchi 7400014 (JP)**
- **NISHIO, Rei,**
**c/o Teijin DuPont Films Japan Limited**
**Anpachi-gun,**
**Gifu 5030123 (JP)**
- **MATSUMURA, Shunichi,**
**c/o Teijin Limited,**
**Iwakuni-shi,**
**Yamaguchi 7400014 (JP)**

(74) Representative: **Hallybone, Huw George et al**
**Carpmaels and Ransford**
**43-45 Bloomsbury Square**
**London WC1A 2RA (GB)**

# (54) POLYESTER RESIN COMPOSITION

(57) A polyester resin composition which is a resin composition comprising a polyester and a laminar silicate that is 60-100% modified by organic phosphonium ion, wherein the content of the laminar silicate is 0.01-20 wt% as inorganic ash and the terminal OH group content is 0.1-45 eq/ton, as well as a process for its production and molded articles comprising it.

Fig. 4

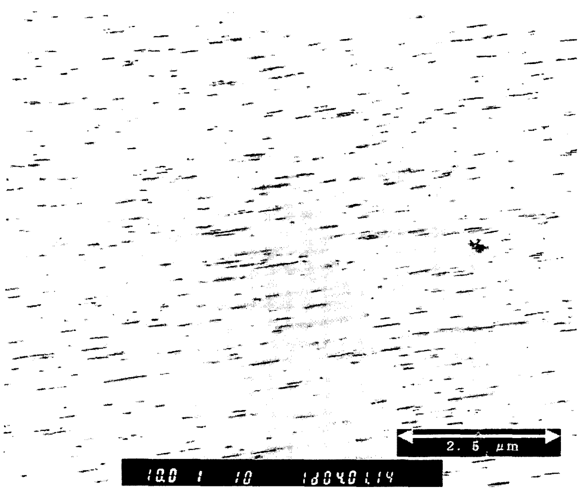




Printed by Jouve, 75001 PARIS (FR)

## Description

### Technical Field

The present invention relates to a polyester resin composition comprising a polyester and a laminar silicate modified by a specific organic phosphonium ion, as well as to a process for its production and molded articles composed thereof. More specifically, the invention relates to a polyester resin composition with excellent heat resistance comprising a polyester and a laminar silicate modified by a specific organic phosphonium ion, wherein the number of terminal OH groups in the composition is within a specified range and the laminar silicate is satisfactorily dispersed, and a polyester resin composition that can yield molded articles with excellent surface smoothness, as well as to a process for its production and to molded articles composed thereof.

### Prior Art

Polyesters are used for a wide variety of purposes that take advantage of their properties such as moldability, dimensional stability, weather resistance, light fastness and chemical resistance. With advancing technology in recent years, however, better properties are being demanded for resins used for different purposes. One technology that has been applied recently to provide the required properties is "nanocomposite" technology employing compositions having laminar compounds dispersed on the nanoscale in thermoplastic resins. Formation of nanocomposites can realize improvement in many different properties, including high heat resistance, high elasticity, flame retardance and gas barrier performance (Nakajo, K., "The World of Nanocomposites", Kogyo Chosakai, 2000). Formation of nanocomposites requires dispersion of laminar compounds on the nanoscale, and various different methods have been attempted. Unlike the more commonly known case of polyamides, nanocomposites employing polyesters typically do not easily achieve the same degree of dispersion as polyamides, and various strategies have been proposed to exhibit their nanocomposite effects. For example, there has been disclosed the use of exchangeable cations such as ammonium salts in organic-modified laminar composites for production of polyester composite materials having laminar compounds dispersed on the monolayer level (Japanese Unexamined Patent Publication No. 2000-53847). In order to realize satisfactory dispersibility in systems with poor dispersibility of laminar silicates, such as polyester systems, it is common to use laminar silicates with modified organic groups that improve compatibility in the mixed resin, or laminar silicates with openings between layers.

Kneading methods have also been examined. For example, there is described a polyester resin composition having a laminar silicate with an interlayer distance of 15-35 Å kneaded with a polyester resin for even dispersion while retaining a layer structure of 5-20 layers (Japanese Unexamined Patent Publication No. 2001-261947). These dispersion processes are carried out under conditions such as high temperature and high shear and require the use of laminar silicates having enough resistance to avoid deterioration during dispersion, in order to inhibit reduction in the physical properties of the polyester resin compositions.

### Disclosure of the Invention

It is an object of the invention to provide a polyester resin composition with excellent heat resistance, which is a resin composition comprising a polyester and a laminar silicate that is 60-100% modified by a specific organic phosphonium ion, wherein the laminar silicate content is 0.01-20 wt% as inorganic ash and the terminal OH group content is 0.1-45 eq/ton, as well as a process for its production and molded articles composed thereof, such as films and fibers, exhibiting excellent surface smoothness.

It is another object of the invention to provide a process for production of the polyester resin composition whereby a polyester is polymerized in the presence of a laminar silicate that is 60-100% modified by an organic phosphonium ion, and the polyester is then kneaded.

The polyester resin composition of the invention has the laminar silicate satisfactorily dispersed therein, whereby the physical properties such as heat resistance, high elastic modulus and gas barrier property are improved while also allowing molded articles such as films and fibers with excellent surface smoothness to be obtained.

Other objects and advantages of the invention will become apparent from the detailed description that follows.

### Brief Explanation of the Drawings

Fig. 1 is an electron microscope photograph of the polyester resin composition of Example 5.

Fig. 2 is an electron microscope photograph of the polyester resin composition of Example 6.

Fig. 3 is an electron microscope photograph of the polyester resin composition of Example 7.

Fig. 4 is an electron microscope photograph of the polyester film of Example 10.

Preferred Embodiments of the Invention

The laminar silicate used for the invention is a laminar silicate in a form with an octahedral sheet structure containing Al, Mg, Li or the like sandwiched between two $SiO_4$ tetrahedral sheet structures, and specifically, there may be mentioned smectite clay minerals such as saponite, hectorite, fluorohectorite, montmorillonite, beidellite and stevensite, expansive synthetic mica such as Li-type fluorotaeniolite, Na-type fluorotaeniolite, Na-type tetrasilicofluoromica and Li-type tetrasilicofluoromica, and vermiculite, fluorovermiculite, halloysite, expansive mica, and the like. These may be natural or synthetic minerals. Preferred laminar silicates among these from the standpoint of cation exchange capacity are smectite clay minerals such as montmorillonite and hectorite, and Li-type fluorotaeniolite and Na-type tetrasilicofluoromica.

The organic phosphonium ion is represented by the following formula (1).

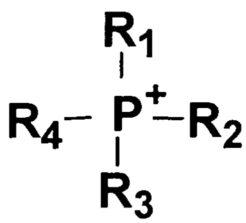

(1)

(wherein $R_1$, $R_2$, $R_3$ and $R_4$ each independently represent a C1-30 hydrocarbon group or a hetero atom-containing hydrocarbon group.

As C1-30 hydrocarbon groups there may be mentioned alkyl groups and aromatic groups. C1-18 alkyl groups are preferred alkyl groups, and as examples there may be mentioned methyl, ethyl, n-propyl, n-butyl, n-dodecyl, n-tridecyl, n-tetradecyl, n-pentadecyl, n-hexadecyl, n-heptadecyl and n-octadecyl. As examples of aromatic groups there may be mentioned phenyl, biphenyl, benzyl, tosyl and the like. $R_1$-$R_4$ may have any substituents from among methyl, ethyl, fluorine and chlorine, so long as they do not affect the thermal stability.

As specific examples of such organic phosphonium ions there may be mentioned tetraethylphosphonium, triethylbenzylphosphonium, tetrabutylphosphonium, tetraoctylphosphonium, trimethyldecylphosphonium, trimethyldodecylphosphonium, trimethylhexadecylphosphonium, trimethyloctadecylphosphonium, tributylmethylphosphonium, tributyldodecylphosphonium, tributyloctadecylphosphonium, trioctylethylphosphonium, tributylhexadecylphosphonium, methyltriphenylphosphonium, ethyltriphenylphosphonium, diphenyldioctylphosphonium, triphenyloctadecylphosphonium, tetraphenylphosphonium and tributylallylphosphonium.

As examples of heteroatom-containing hydrocarbon groups there may be mentioned C1-30 hydroxy-substituted hydrocarbon groups, alkoxy-substituted hydrocarbon groups and phenoxy-substituted hydrocarbon groups, and preferred examples include the following substituents and their isomers (where a and b are integers of 1-29 and the number of carbon atoms in the substituent is an integer of no greater than 30).

Hydroxy-substituted hydrocarbon groups:

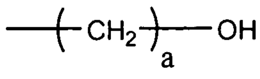 , 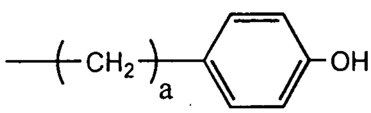 ,

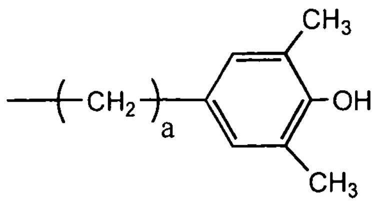

,

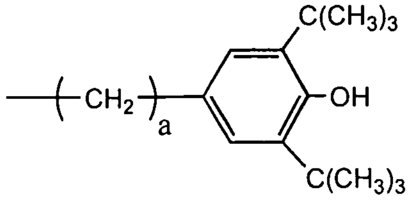

Alkoxy-substituted hydrocarbon groups:

$$-(CH_2)_a-O-(CH_2)_b-CH_3$$

Phenoxy-substituted hydrocarbon groups:

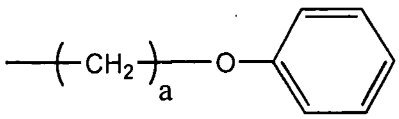

The aforementioned organic phosphonium ions may be used alone or in combinations.

The laminar silicate of the invention is ion-exchanged by the organic phosphonium ion at 60-100% with respect to the cation exchange capacity of the laminar silicate. The cation exchange capacity of the laminar silicate may be measured by a prior art method, and of the laminar silicates mentioned above, the laminar silicate used for the invention is preferably one having an ion capacity of about 0.2-3 meq/g. A cation exchange capacity of 0.2 meq/g or greater is advantageous in terms of dispersibility because an organic phosphonium ion exchange rate can be increased. On the other hand, a capacity of no greater than 3 meq/g will facilitate exchange of the organic phosphonium ion and is therefore preferred for producing a laminar silicate of the invention. The cation exchange capacity is even more preferably 0.8-1.5 meq/g.

The cation exchange rate can be calculated by the following formula (2).

$$\text{Cation exchange rate (\%)} = \{W_f/(1-W_f)\}/(M_{org}/M_{si}) \times 100 \cdot (2)$$

($W_f$ represents the weight loss of the laminar silicate as measured with a Thermo Gravimetric Analysis from 120°C to 800°C at a temperature-elevating rate of 20°C/min, $M_{org}$ represents the molecular weight of the onium ion, and $M_{si}$ represents the molecular weight per charge in the cation portion of the laminar silicate. The molecular weight per charge of the cation portion of the laminar silicate is the value calculated as the reciprocal of the cation exchange capacity (units: eq/g) of the laminar silicate.)

By exchanging the cation of the laminar silicate by use of the organic phosphonium ion, the organic phosphonium infiltrates and spreads between the layers. The average of the interlayer distance can be calculated from the peak position in X-ray diffraction. The preferred mean interlayer distance is 1.5 nm or greater. If it is less than 1.5 nm, the dispersibility into the polyester resin may be impeded.

The method of exchanging the cation of the laminar silicate with the organic phosphonium ion may be a known prior art method. Specifically, the pristine laminar silicate is dispersed in a polar solvent such as water, ethanol, methanol or the like, and the organic phosphonium ion is added thereto or a solution containing organic phosphonium is added thereto. The preferred concentration for the modification reaction is 0.1-5 wt% as the concentration of the laminar silicate,

and the organic phosphonium is preferably dissolved for the reaction. If the concentration is lower than 0.1 wt%, the amount of the entire solution will be too great for satisfactory handling. If the content exceeds 5 wt%, the viscosity of the laminar silicate dispersion will be too high, possibly reducing the cation exchange rate. The concentration of the laminar silicate is more preferably 0.5-4.5 wt% and even more preferably 1-4 wt%. The temperature for the reaction may be such that gives a sufficiently low viscosity for stirring of the laminar silicate dispersion, and in the case of water, for example, the cation exchange reaction is preferably carried out at about 20-100°C.

After completion of the reaction, the laminar silicate that has been modified in this manner is preferably adequately rinsed to remove the unreacted organic phosphonium ion. This is because of the high temperature of 250°C during dispersion in the polyester, whereby volatile or decomposing components can adversely affect the physical properties of the polyester resin composition at that temperature in subsequent steps. There are no particular restrictions on the rinsing method, and for example, there may be mentioned rinsing with a good solvent for the organic phosphonium, such as an organic solvent.

The presence or absence of phosphonium ion that has not participated in the cation exchange reaction of the laminar silicate of the invention may be confirmed by a method known in the prior art, such as fluorescent X-ray analysis or atomic absorption analysis, measuring the presence or absence of counter ion of the organic phosphonium used as the starting material.

The cation exchange rate is advantageously 60% or greater from the viewpoint of dispersibility, since it will increase the exchange rate of organic phosphonium ion in the laminar silicate. The cation exchange rate is also advantageously no greater than 100% from the viewpoint of thermal stability, because otherwise the counter ion of the organic phosphonium ion used as the starting material will not be present. The cation exchange rate is more preferably 65-99% and even more preferably 70-99%.

The temperature for 5% weight loss of the laminar silicate of the invention as measured with a Thermo Gravimetric Analysis at a temperature-elevating rate of 20°C/min in a nitrogen atmosphere is preferably 310°C or higher. If the temperature for 5 wt% weight loss is below 310°C, considerable decomposition may occur during melting and kneading of the polyester, resulting in re-aggregation of the laminar silicate or generation of decomposition gas and thereby degrading the resin properties. From this viewpoint, the temperature for 5 wt% weight loss is preferably as high as possible, and for the laminar silicate of the invention, it is preferably 330°C or higher, more preferably 340°C or higher and even more preferably 350°C or higher in consideration of an onium structure capable of imparting good dispersibility.

The laminar silicate used for production of the resin composition of the invention preferably has a specific surface area ratio of 2.5-200 $m^2/g$. The specific surface area ratio may be determined by the BET method using nitrogen. If the specific surface area ratio is at least 2.5 $m^2/g$, it will be possible to obtain a polyester resin composition comprising a satisfactorily evenly dispersed laminar silicate and polyester resin, exhibiting improved efficiency of dispersion for dispersion in the resin. Conversely, if the specific surface area ratio exceeds 200 $m^2/g$, the fine particles will have an excessively large specific surface area ratio and therefore increased bulk density, potentially making the powder difficult to handle and hampering removal of adsorbed moisture. The specific surface area ratio is more preferably 3-100 $m^2/g$, even more preferably 4-80 $m^2/g$ and yet more preferably 5-50 $m^2/g$.

The laminar silicate having such a large specific surface area ratio is preferably produced by freeze-drying the organic phosphonium-exchanged laminar silicate from a medium with a freezing point of between -20°C and 100°C.

The medium used for freeze-drying is preferably one having a freezing point of -20°C or higher. If the freezing point is below -20°C, the freezing temperature of the medium will be too low, thereby lowering the overall freezing point and often reducing the medium removal efficiency. Examples of preferred media to be used for freeze-drying include water, benzene, cyclohexane, cyclohexanone, benzyl alcohol, P-dioxane, cresol, P-xylene, acetic acid and cyclohexanol. The laminar silicate dispersion used for freeze-drying may be the same one used for the cation exchange reaction, or it may be one that allows satisfactory dispersion of the laminar silicate after the cation exchange reaction. Particularly in the case of a medium with good dispersibility of the laminar silicate, it is possible to accomplish freeze-drying while maintaining the exfoliated state of the silicate layers of the laminar silicate, thereby allowing the specific surface area ratio to be significantly increased. The freeze-drying may be carried out by removing the medium under reduced pressure after the laminar silicate dispersion has been frozen, and it is normally accomplished with a laminar silicate concentration of 1-70 wt%. If the laminar silicate concentration is less than 1%, the dispersed state before drying is satisfactory but handling after drying becomes complicated and productivity may be reduced. Also, if the laminar silicate concentration exceeds 70 wt%, the specific surface area ratio of the product will be reduced, thereby impeding dispersion in the resin. From this viewpoint, the laminar silicate concentration before freeze-drying is preferably 5-60 wt%, more preferably 10-50 wt% and even more preferably 12-40 wt%.

The polyester resin used for the invention is a polycondensate of a dicarboxylic acid and/or its derivative and a diol, or is composed of a hydroxycarboxylic acid, or is a copolymer of these. As dicarboxylic acid components for the polyester there may be mentioned aromatic dicarboxylic acids such as terephthalic acid, isophthalic acid, orthophthalic acid, 2,6-naphthalenedicarboxylic acid, 2,7-naphthalenedicarboxylic acid, 1,5-naphthalenedicarboxylic acid, 4,4'-biphenyldicarboxylic acid, 2,2'-biphenyldicarboxylic acid, 4,4'-diphenyletherdicarboxylic acid, 4,4'-diphenylmethanedicarboxylic acid, 4,4'-diphenylsulfonedicarboxylic acid, 4,4'-diphenylisopropylidenedicarboxylic acid and 5-sodiumsulfoisophthalic acid, aliphatic dicarboxylic acids such as dicarboxylic acid, oxalic acid, succinic acid, adipic acid, sebacic acid, dodecanedicarboxylic acid, octadecanedicarboxylic acid, maleic acid and fumaric acid, and alicyclic dicarboxylic acids such as 1,4-cyclohexanedicarboxylic acid.

As diols there may be mentioned aliphatic diols such as ethylene glycol, 1,2-propylene glycol, 1,3-propylene glycol, 1,3-butanediol, 1,4-butanediol, 2,2-dimethylpropanediol, neopentyl glycol, 1,5-pentadiol, 1,6-hexanediol, 1,8-octanediol, 1,10-decanediol, 1,4-cyclohexanedimethanol, 1,3-cyclohexanedimethanol, 1,2-cyclohexanedimethanol, trimethylene glycol, tetramethylene glycol, pentamethylene glycol, octamethylene glycol, diethylene glycol and dipropylene glycol, and diphenols such as hydroquinone, resorcinol, bisphenol A and 2,2-bis(2'-hydroxyethoxyphenyl)propane.

As hydroxycarboxylic acids there may be mentioned aromatic hydroxycarboxylic acids such as p-hydroxybenzoic acid, p-(hydroxyethoxybenzoic acid, 6-hydroxy-2-naphthoic acid, 7-hydroxy-2-naphthoic acid and 4'-hydroxy-biphenyl-4-carboxylic acid.

Preferred polyesters are aromatic polyesters, and specifically there may be mentioned polyethylene terephthalate (PET), polytrimethylene terephthalate, polybutylene terephthalate, polycyclohexylenedimethylene terephthalate, polyethylene-2,6-naphthalate, polybutylene naphthalate, polyethyleneisophthalate-terephthalate copolymer, p-hydroxybenzoic acid/6-hydroxy-2-naphthoic acid copolymer and the like. Of these, the polyester is preferably one or more selected from the group consisting of polyethylene terephthalate, polytrimethylene terephthalate, polybutylene terephthalate and polyethylene-2,6-naphthalate.

According to the invention, the resin composition comprising the polyester and the laminar silicate modified with an organic phosphonium ion comprises the laminar silicate at 0.01-20 wt% as inorganic ash. The inorganic ash content is the value calculated from the residue obtained by combustion in air at 1000°C. The inorganic ash content is preferably at least 0.01 wt% in order to exhibit an effect of adding the laminar silicate. The content is also preferably no greater than 20 wt%, for melt fabrication of the obtained polyester resin composition. The inorganic ash content is more preferably 0.1-12 wt% and even more preferably 0.4-8 wt%.

The polyester resin composition of the invention has a terminal OH content of 0.1-45 eq/ton. The terminal OH content is measured by 1H-NMR at 50°C, 600 MHz in a solution obtained by mixing isopropylamine with hexafluoroisopropanol:deuterated chloroform = 1:3. Assignment may be confirmed by reference to the published literature. The terminal OH content is in a low range compared to the terminal OH content of polyesters obtained by conventional polymerization. Although the mechanism is not understood in detail, it is believed that a portion of the hydroxyl groups of the polyester participate in some sort of interaction with the laminar silicate, thereby helping to improve the physical properties including the dispersibility and elastic modulus of the laminar silicate. The terminal group content of a polyester should reflect the number-average molecular weight of the polyester, but in the resin composition of the invention, the overall terminal group content (the terminal OH group and COOH group content in the case of a polyester) is no greater than 90% of a polyester containing no laminar silicate, for a polyester with an equivalent solution viscosity. This is attributed to interaction between some of the aforementioned OH groups and the laminar silicate, whereby the number of terminal OH groups is reduced. Thus, the overall terminal group concentration (the terminal OH group and COOH group content in the case of a polyester) is more preferably no greater than 85% and even more preferably no greater than 80% of a polyester containing no laminar silicate.

Consequently, when the terminal OH group content is less than 0.1 eq/ton, this corresponds to too much interaction causing an excessive melt viscosity, or to a polyester having an excessive number of terminal COOH groups, thus resulting in difficult melt fabrication in the former case or loss of chemical stability in terms of hydrolysis resistance of the polyester itself in the latter case. If the content is greater than 45 eq/ton, interaction between the laminar silicate and terminal OH groups is insufficient, resulting in a minimal effect of improving the physical properties including elastic modulus. For these reasons, the terminal OH group content is more preferably 1-40 eq/ton, even more preferably 1-35 eq/ton and yet more preferably 1-30 eq/ton.

The process for production of the resin composition of the invention is preferably production with a step of

(A) polymerization of a dicarboxylic acid or its ester derivative with an aliphatic glycol, and/or a hydroxycarboxylic acid, in the presence of a laminar silicate that has been ion-exchanged with an organic phosphonium ion to 60-100% with respect to the ion exchange capacity, to obtain a polyester resin composition with a laminar silicate content of 0.01-30 parts by weight with respect to 100 parts by weight of the polyester, and a step of (B) melt mixing at a shear rate of 250/s or greater at a temperature above the freezing point of the polyester.

Polymerization of the polyester is accomplished by reaction between a dicarboxylic acid composed mainly of an aromatic dicarboxylic acid, or an ester derivative thereof, and an aliphatic glycol. Alternatively, a hydroxycarboxylic acid may also be reacted therewith. The dicarboxylic acid, aliphatic glycol and hydroxycarboxylic acid used may be any of the aforementioned compounds. This reaction is known to those skilled in the art, and it comprises a process of esterification by heating the dicarboxylic acid and glycol at conventional pressure or under pressurization, or transesterification reaction by heating an ester-forming derivative of the dicarboxylic acid and a glycol at conventional pressure or under pressurization, and a process of polycondensation of the reaction product while removing the glycol component under reduced pressure.

The organic-modified laminar silicate may be added at any stage of the polyester polycondensation process. It is preferably added after the transesterification reaction and at the start of the polycondensation reaction. By adding the organic-modified laminar silicate during the polymerization in this manner, it is possible to improve the affinity between the laminar silicate and polyester, to result in spreading of the laminar silicate layer in the polyester and homogeneous dispersion in the subsequent step (B). Furthermore, since it is possible to sufficiently increase the polymerization degree in step (A), reduction in the molecular weight of the polyester resin obtained by step (B) can be attenuated.

The laminar silicate modified by the organic phosphonium ion may be added in the form of a powder or slurry. Addition as a powder is effective because it allows the solvent removal step to be eliminated, but depending on the method of addition, the organic-modified laminar silicate may re-aggregate, thus resulting in poor dispersibility. Addition in the form of a slurry is preferred because it allows air in the powder to be eliminated beforehand, thereby facilitating mixture with the transesterified product. The solvent used for addition as a slurry is most preferably the diol of the polyester to be produced. Using a different solvent may result in separation of the glycol component or incorporation into part of the polyester structure. While there are no particular restrictions on the process for producing the slurry, it is preferred to carry out physical dispersion utilizing, for example, a ball mill, medium-stirring mill, homogenizer, ultrasonic treatment or the like. The concentration of the laminar silicate in the slurry is preferably 0.05-90 wt%. It is preferably not less than 0.05 wt% because the amount of glycol will be too great, rendering its subsequent removal more difficult. If it is greater than 90 wt%, it will be difficult to form a slurry suitable for addition. The concentration of the laminar silicate in the slurry is more preferably 0.1-70 wt%, and even more preferably 1-50 wt%. In order to obtain a uniform slurry, the laminar silicate preferably has a sufficient specific surface area ratio for dispersion in the solvent. Specifically, the specific surface area ratio using the three-point method with nitrogen gas is preferably at least 1 $m^2/g$ and more preferably at least 2 $m^2/g$.

The reaction thereafter may be carried out in the same manner as for conventional polyester polymerization.

A polyester resin composition comprising a laminar silicate obtained by polymerization step (A) described above preferably comprises at least 50% of a laminar silicate with an interlayer distance $d_A$ of 2.0 nm or greater calculated from the X-ray diffraction peak, while the average number of layers $N_A$ of the laminar silicate calculated by the Scherrer formula (3) below based on the line diffraction peak and its half-width is preferably no greater than 7.

$$D=K/\lambda/\beta\cos\theta \qquad (3)$$

(where D is the crystallite size, $\lambda$ is the wave length of measuring X-ray, $\beta$ is the full width of half maximum intensity, $\theta$ is Bragg angle of the diffraction line, and K is the Scherrer constant.)

The interlayer distance of the laminar silicate may be determined by X-ray diffraction, using the diffraction angle of the diffraction peak due to diffraction between the layers of the laminar silicate. If the laminar silicate has become exfoliated into single layers, no peak will be detected in X-ray diffraction. In such cases, the interlayer distance will be shown as infinite. A wider interlayer distance is preferred particularly from the standpoint of facilitating exfoliation of the laminar silicate in step B. The value is more preferably 2.5 or greater.

The proportion of laminar silicate satisfying the condition of an interlayer distance $d_A$ of 2.0 nm or greater can be calculated from the peak area ratio in X-ray diffraction. That is, the ratio between the sum of the peak intensities of peaks satisfying the condition of an interlayer distance $d_A$ of 2.0 nm or greater and the total area of the peaks assigned to diffraction between layers of the laminar silicate is preferably at least 50%. If it is 50% or less, the dispersibility of the laminar silicate in the final composition will be insufficient, and the physical strength may be reduced when it is formed into a molded article, for example. The ratio is more preferably 55% or greater and even more preferably 60% or greater.

The average number of layers can be determined by measuring the diffraction peak using X-ray diffraction, calculating the crystallite size from the Scherrer formula shown above, and dividing it by the interlayer distance. A smaller average number of layers is preferred for dispersion of the laminar silicate and improvement in the physical properties such as elastic modulus of the obtained molded articles.

A laminar silicate whose layers have completely exfoliated into single layers does not appear in X-ray diffraction. In such cases, the interlayer distance will be shown as infinite and the number of layers will be one. When absolutely no peak caused by diffraction between layers is observed in the range measured by X-ray diffraction, this means that the content of laminar silicate with an interlayer distance $d_A$ of 2.0 nm or greater is at least 50% and the average number of layers $N_A$ is no greater than 7.

In the subsequent (B) step of melt-kneading of the polyester resin composition at a shear rate of 250/s or greater at a temperature above the freezing point of the polyester, the resin obtained in step (A) is melt-kneaded at a

shear rate of 250/s to satisfactorily obtain the desired polyester resin composition.

The shear rate is determined by the following formula (4).

$$\gamma = \pi \times d \times (N/60) / C \qquad (4)$$

$\gamma$: shear rate (/s), d: screw inner diameter (mm), N: screw rotation rate (rpm), C: clearance between screw and barrel (mm)

The melt kneading may be accomplished by a method known in the prior art, and for example, it may utilize a single-screw extruder, a twin-screw extruder or the like. The shear rate is preferably not less than 250/s during this time, because the kneading performance will be insufficient and the dispersibility of the laminar silicate in the polyester resin composition will be inadequate. The shear rate is more preferably at least 280/s and even more preferably at least 300/s.

The temperature for melt kneading is preferably above the flow start temperature of the polyester (the glass transition temperature for an amorphous resin or the melting point for a crystalline resin) and no higher than 350°C, more preferably it is at least (flow start temperature + 5)°C and no higher than 330°C, and even more preferably it is at least (flow start temperature + 10)°C and no higher than 320°C. The temperature is preferably not too far below the flow start temperature in order to avoid impeding melt fabrication, and it is preferably not too high above 350°C in order to avoid extreme decomposition of the ion-exchanged laminar silicate.

The polyester resin composition obtained by the melt kneading step (B) described above preferably comprises at least 50% of a laminar silicate with an interlayer distance $d_B$ of 2.0 nm or greater calculated from the X-ray diffraction peak, while the average number of layers $N_B$ of the laminar silicate calculated by the Scherrer formula shown above based on the line diffraction peak and its half-width is preferably no greater than 5.

The value of $d_B$ which is the interlayer distance of the laminar silicate can be determined by X-ray diffraction, using the diffraction angle of the diffraction peak due to diffraction between layers of the laminar silicate. When the laminar silicate is exfoliated into single layers, no peak is detected in X-ray diffraction. In such cases, the interlayer distance will be shown as infinite. A wider interlayer distance facilitates exfoliation of the laminar silicate, and is preferred from the standpoint of dispersion. The interlayer distance is more preferably at least 2.5 nm.

The proportion of laminar silicate satisfying the condition of an interlayer distance $d_B$ of 2.0 nm or greater can be calculated from the peak area ratio in X-ray diffraction. That is, the ratio between the sum of the peak areas of peaks satisfying the condition of an interlayer distance $d_B$ of 2.0 nm or greater and the total area of the peaks assigned to diffraction between layers of the laminar silicate is preferably at least 50%. If it is less than 50%, the laminar silicate is not adequately modified by organic phosphonium. This is not preferred because it will not be possible to adequately achieve the desired improvement in gas barrier properties and physical properties. The ratio is more preferably 80% or greater, even more preferably 90% or greater and yet more preferably 95% or greater.

A smaller average number of layers is preferred for dispersion of the laminar silicate and improvement in the physical properties such as elastic modulus of the obtained molded articles, and the average number of layers $N_B$ is also preferably no greater than 5.

A polyester resin composition that can yield molded articles with excellent surface smoothness and a laminar silicate composing it according to the invention will now be explained.

The laminar silicate of the invention preferably has the calcium eliminated from the aforementioned natural or synthetic laminar silicate, for a calcium content of no greater than 0.5% as the elemental proportion measured by fluorescent X-ray analysis. Because natural montmorillonite contains alkali metals such as sodium ion and potassium ion and alkaline earth metals such as calcium ion and magnesium ion between layers, it is preferred to carry out a step of removing calcium ion when a natural laminar silicate is used. If the calcium content in the laminar silicate exceeds 0.5% in terms of the elemental proportion, coarse aggregate contaminants with 50 or more stacked layers of the laminar silicate will tend to result, often causing a problem for molded articles that require surface smoothness. A lower calcium content is preferred, and in terms of elemental proportion the calcium content is preferably no greater than 0.3% and even more preferably no greater than 0.1%.

One method of removing calcium ion is 1) treatment with water-soluble ammonium, complete exchange of the ion-exchangeable cations between the layers, and then treatment with organic phosphonium ion. Another method is 2) treatment with water-soluble ammonium, complete exchange of the ion-exchangeable cations between the layers, and then treatment with an alkali metal salt such as sodium chloride and potassium chloride to load the alkali ion between the layers. This is followed by treatment with organic phosphonium ion. The calcium ion between the layers of the laminar silicate can be completely eliminated in this manner. Complete elimination of calcium ion can be confirmed by fluorescent X-ray analysis.

There are no particular restrictions on the water-soluble ammonium, and examples include ammonium sulfate, ammonium nitrate, ammonium acetate, ammonium chloride and ammonium bromide. Preferred are ammonium acetate and ammonium chloride for their general utility. Ammonium acetate is especially preferred. These water-soluble ammonium compounds are preferably used alone but may also be used in combinations. Specifically, the pristine laminar silicate is dispersed in ion-exchanged water. In this case, the laminar silicate concentration is in the range of 0.1-10 wt%. It is preferably 1-5 wt% and more preferably 1.5-3 wt%. An aliphatic ammonium salt or a solution containing an aliphatic ammonium salt is added to the laminar silicate dispersion. This may be followed by treatment with an organic phosphonium ion, or the aliphatic ammonium ion between the layers may be first replaced with alkali metal ion using an alkali metal salt such as sodium chloride or potassium chloride and then treated with an organic phosphonium ion.

In the case of treatment with an alkali metal salt, the laminar silicate having aliphatic ammonium ion between the layers is dispersed/suspended in ion-exchanged water, and the salt is added in a range of 1.0-10 equivalents with respect to the ion-exchange capacity of the laminar silicate. The range is preferably 1.0-5.0 equivalents and more preferably 1.0-2.0 equivalents. The addition is followed by filtration and thorough washing with ion-exchanged water. As washing proceeds, the silicate is dispersed in the ion-exchanged water. The organic phosphonium ion is added to this dispersion for replacing of the organic phosphonium ion between the layers of the laminar silicate. The organic phosphonium salt is added in a range of 1.0-10 equivalents with respect to the ion-exchange capacity of the laminar silicate. The range is preferably 1.0-5.0 equivalents and more preferably 1.0-2.0 equivalents.

In order to obtain a molded article with more excellent surface smoothness, the polyester resin composition of the invention preferably has a quartz content of no greater than 0.009 wt%. In particular, natural montmorillonite often contains silicon dioxide compounds, i.e. quartz. Quartz is not modified by ion exchange with organic ions, which is the usual modification method for laminar silicates, and this results in inadequate dispersion in the matrix which can cause low moldability and surface smoothness, as well as reduced mechanical properties. Although it is preferred to eliminate as much of the quartz as possible from the laminar silicate, its elimination is difficult because quartz has a density close to that of laminar silicate, and it is therefore often observed in the final product.

The quartz contained in the polyester resin composition can be quantitated by comparing the diffraction peak intensity of X-ray diffraction with the peak intensity of the laminar silicate. The intensity of analyzed peaks has a proportional relationship with the quartz content. The calibration peak used may be derived, for example, from the peak for quartz of known content (3.35 Å) and the analysis peak for laminar silicate of known content (for example, 4.48 Å in the case of montmorillonite). Calculation is performed from the content of laminar silicate in the polyester resin composition, and the peak intensity of quartz and the peak intensity of the laminar silicate in X-ray diffraction. If the quartz content is 0.009 wt% or greater, the obtained molded article may have lower surface properties and more defects. The content is more preferably no greater than 0.008 wt%.

The method of eliminating the quartz may involve dispersing the laminar silicate with quartz in a solvent, and precipitating the quartz which has higher density, and then recovering the supernatant. If necessary, the supernatant may be concentrated and redispersed in water, and the aforementioned procedure may be repeated to obtain a lower concentration of quartz. The solvent used here is not particularly restricted and may be any solvent that can satisfactorily disperse the laminar silicate, of which examples include methanol, ethanol, ethylene glycol, N-methylpyrrolidone, formamide, N-methylformamide, N,N-dimethylformamide, water and the like. The concentration of the laminar silicate in the solvent may be a concentration at which the quartz alone is selectively precipitated without excessive increase in the viscosity of the solution. Specifically, such a concentration is no greater than 10 wt% and more preferably no greater than 8 wt%. Heating or the like may also be carried out during the dispersion for more satisfactory dispersion of the laminar silicate. The precipitation and separation of the quartz can be accomplished using an conventional centrifugal separator and decanter.

The polyester resin composition of the invention may be used for molded articles by injection molding according to prior art methods, and preferably for films or sheets by melt film fabrication or fibers by melt spinning. The temperature for melt fabrication is preferably above the flow start temperature of the polyester resin (the glass transition temperature for an amorphous resin or the melting point for a crystalline resin) and no higher than 350°C, more preferably it is at least (flow start temperature + 5)°C and no higher than 330°C, and even more preferably it is at least (flow start temperature + 10)°C and no higher than 320°C. If the temperature is below the flow start temperature, molding may become difficult. The laminar silicate of the invention is characterized by having excellent heat resistance, but nevertheless, if the molding temperature is higher than 350°C, the decomposition of the ion-exchanged laminar silicate will occur.

For production of a high-modulus film, it is preferred to also perform drawing. The drawing method may be a method known in the prior art, and for example, there may be mentioned a method of successive or simultaneous drawing in a uniaxial direction or biaxial directions. The elongation temperature is preferably above the glass transition temperature of the resin composition and no higher than the glass transition temperature + 90°C, more preferably above the glass transition temperature of the resin composition and no higher than the glass transition temperature + 70°C, and even more preferably above the glass transition temperature and no higher than the glass transition temperature + 60°C. The elongation temperature is preferably not too low or too high because it may be become difficult to obtain a homogeneous film. The drawing ratio is preferably 2-100, more preferably 4-70 and even more preferably 6-50 in terms of the area increase.

If the polyester resin is crystalline, the film is preferably subjected to heat treatment after drawing orientation.

The temperature for heat treatment is preferably above the glass transition temperature and no higher than the melting point of the polyester. A more preferred temperature is established in consideration of the crystallization temperature and physical properties of the obtained film.

The diffraction peak intensity between layers of the laminar silicate in X-ray diffraction in the cross-sectional direction of the polyester film is preferably such that the orientation factor fc in formula (5) below is no greater than 0.8.

$$fc = \frac{3 < \cos^2 \phi > c - 1}{2}, \quad < \cos^2 \phi > c = \frac{\int_0^{\pi/2} Ic(\phi) \cos^2 \phi \sin \phi \, d\phi}{\int_0^{\pi/2} Ic(\phi) \sin \phi \, d\phi} \qquad (5)$$

(wherein fc is the orientation factor, φ is the declination in the in-plane direction of the film, and Ic(φ) is the diffraction intensity for the declination φ)

In formula (5), fc is the orientation factor derived from diffraction in the direction normal to the layers of the laminar silicate, and it may be calculated from $<\cos^2\varphi>c$. This can be calculated according to formula (5), by measuring the diffraction intensity Ic(φ) between layers of the laminar silicate with respect to the declination φ in the direction normal to the film surface, for X-ray diffraction with the X-rays irradiated in the direction normal to the cross-section of the film.

If the orientation factor fc is not at least 0.8, orientation of the laminar silicate within the plane of the film will be insufficient, a situation that is undesirable for realizing a high modulus film. The upper limit for the orientation factor fc is defined as 1. The orientation factor fc is more preferably at least 0.85, even more preferably at least 0.88 and yet more preferably at least 0.9.

As processes for producing fibers there may be mentioned conventional processes for discharge of a polymer from a spinning nozzle by melting to its flow temperature and taking over to form fibers with a single filament size of 3.3-33 dtex. The melt spinning is carried out with a take-over speed (spinning speed) of 10-6000 m/min. The obtained filament is then subjected to a suitable drawing procedure. A drawing procedure is preferred in the case of a low take-over speed. The drawing factor is preferably about 2-20, and the drawing temperature is preferably between the glass transition temperature and the crystallization temperature, preferably between the glass transition temperature + 10°C and the crystallization temperature - 10°C, and more preferably between the glass transition temperature + 20°C and the crystallization temperature -20°C.

The polyester fiber obtained in this manner is reinforced by the oriented laminar silicate, to produce a polyester fiber with a high elastic modulus and high strength.

The shape of the nozzle used for spinning in production of a fiber according to the invention is not particularly restricted, and it may have a round shape, irregular shape and a solid or hollow form.

A smaller average number of layers of the laminar silicate in the molded article is preferred to result in more satisfactory dispersion of the laminar silicate, and to improve the physical properties such as elastic modulus of the obtained molded article. A molded article composed of the polyester resin composition of the invention preferably has an average number of layers $N_c$ of the laminar silicate of no greater than 5, as calculated by the Scherrer formula from the line diffraction peak and its half-width.

Complete exfoliation of silicate layer in the polyester resin is difficult. In practical purposes, it is possible to realize sufficient improvement in the physical properties such as elastic modulus with an average number of layers of 2 and especially 3 or more.

From the polyester resin composition of the invention it is possible to obtain films and fibers with satisfactorily dispersed laminar silicates and excellent surface smoothness. It is also possible to obtain films with a mean roughness Ra of no greater than 30 nm as the range for the surface roughness of the films, so that they may be used for various purposes including magnetic tapes and wrapping films.

## Examples

The present invention will now be explained in greater detail by the following examples. It is to be understood, however, that the invention is in no way limited to the examples.

(1) Laminar silicate: montmorillonite (KUNIPIA (109 milliequivalents/100 g sodium-exchange capacity), product of Kunimune Industries Co., Ltd.).

(2) Cation exchange rate: This was determined from the weight loss upon heating to 800°C at 20°C/min in an air atmosphere using a TG8120 Thermo Gravimetric Analysis by Rigaku Corp., according to the following formula.

$$\text{Cation exchange rate (\%)} = \{Wf/(1-Wf)\}/(M_{org}/M_{si}) \times 100$$

(Wf represents the weight loss of the laminar silicate as measured with a Thermo Gravimetric Analysis from 120°C to 800°C at a temperature-elevating rate of 20°C/min, $M_{org}$ represents the molecular weight of the onium ion, and $M_{si}$ represents the molecular weight per charge in the cation portion of the laminar silicate. The molecular weight per charge of the cation portion of the laminar silicate is the value calculated as the reciprocal of the cation exchange capacity (units: eq/g) of the laminar silicate.)

(3) Thermal decomposition temperature: A TG8120 Thermo Gravimetric Analysis by Rigaku Corp. was used to determine the temperature for 5% weight loss, with measurement in nitrogen at 20°C/min.

(4) Specific surface area ratio: The specific surface area ratio was determined by measuring the weight using the three-point method with $N_2$ gas in a NOVA1200 by Quantum Chrome Co., and dividing it by the weight of the sample.

(5) Weight ratio of polyester resin and laminar silicate inorganic ash in resin composition:

At least a 20 g portion of the resin was added and dried for 5 hours at 180°C, and then the dry weight was measured. The temperature was then raised to 350°C at 10°C/min, and then was again raised to 620°C at 0.1°C/min. After further raising the temperature to 1000°C at 5°C/min, it was held at that temperature for 5 hours for combustion of the organic components. The weight of the remaining components was used for calculation by the following formula.

$$\text{Inorganic ash (wt\%)} = B/A \times 100$$

Here, A is the weight of the dry polyester resin composition in grams, and B is the weight in grams after combustion.

(6) Interlayer distance and average number of layers of laminar silicate: These were calculated from the diffraction peak position using a RAD-B powder X-ray diffraction apparatus by Rigaku Corp. The average number of layers was determined by calculating the crystallite size from the following formula, and dividing it by the interlayer distance. The Scherrer constant used was 0.9.

$$D=K/\lambda/\beta\cos\theta$$

(where D is the crystallite size, $\lambda$ is the wavelength measuring X-ray, $\beta$ is the full width of half maximum intensity, $\theta$ is Bragg angle of diffraction line, and K is the Scherrer constant.)

(7) Reduced viscosity ($\eta sp/C$): The reduced viscosity was measured using a phenol/tetrachloroethane (weight ratio: 4:6) solution at a concentration of 1.2 g/dL and a temperature of 35°C.

(8) Terminal hydroxyl content: The terminal hydroxyl content was determined by measurement at 50°C, 600 MHz in a solution obtained by mixing isopropylamine with hexafluoroisopropanol:deuterated chloroform = 1:3, and calculating from the 1H-NMR integral value for methylene present at the $\beta$ position of the OH terminal at 4.53 ppm.

(9) Terminal COOH content: This was determined by measurement at 50°C, 600 MHz in a solution obtained by mixing isopropylamine with hexafluoroisopropanol:deuterated chloroform = 1:3, and calculating from the 1H-NMR integral value derived from the polymer terminal peak.

(10) TEM/EDS measurement: TEM was performed using a JEM-2010 by JEOL Corp. with an acceleration voltage of 200 kV, and EDS analysis was performed using a NORAN by Tracor Northern Co., with a 15 nm probe diameter.

(11) Quartz content: A RAD-B powder X-ray diffraction apparatus by Rigaku Corp. was used for measurement of the laminar silicate modified with organic phosphonium ion, and calculation was performed from the quartz peak and laminar silicate peak intensity ratio.

(12) Center surface average roughness Ra: A non-contact three-dimensional roughness meter (NT-2000) by Veeco Co. was used for measurement with a measuring factor of 25x and a measuring area of 188 $\mu$m $\times$ 247 $\mu$m. The measuring mode used was PSI mode. Measurement was conducted at two locations each and the average was taken.

(13) Film elastic modulus: A tensile test was conducted by cutting out a sample to 5 mm $\times$ 50 mm and using a UCP-100 tensile tester by A&D Corp. at a stretching speed of 5 mm/min.

(14) Fiber strength and elastic modulus: These were measured using a UCT-1T by Orientech Co., Ltd.

Reference Example 1 Synthesis of cation-exchanged laminar silicate

After adding 1.5 kg of KUNIPIA F (interlayer distance: 1.26 nm) to 40 L of ion-exchanged water, dispersion was carried out with a bead mill. The dispersion was passed through a 5 μm filter to remove the coarse particles, in order to obtain an aqueous dispersion containing 3 wt% KUNIPIA F. A 38 kg portion of the dispersion was heated and stirred at 80°C while adding a solution comprising 1 kg of n-hexadecyltri-n-butylphosphonium bromide and 3 L of ion-exchanged water, and the mixture was stirred for 3 hours at 80°C.

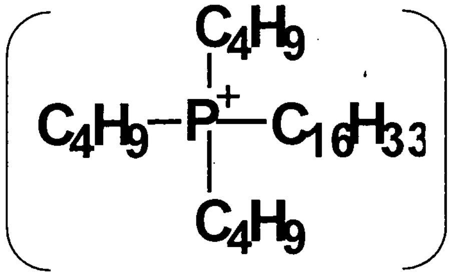 Br-

The solid portion was filtered out from the mixture and rinsed 3 times with methanol and 3 times with water, after which it was freeze-dried to obtain a cation-exchanged laminar silicate. The ion-exchange rate was 85%. The specific surface area ratio of the laminar silicate obtained in this manner was 5.3 $m^2/g$. The mean interlayer distance according to X-ray diffraction was 2.2 nm, and the average number of layers was 5.6. The 5% weight loss temperature was 365°C.

Example 1

There were reacted 200 parts by weight of dimethyl 2,6-naphthalenedicarboxylate and 120 parts by weight of ethylene glycol while gradually heating from 180°C to 200°C, using 0.120 part by weight of manganese acetate as the transesterification reaction catalyst, and then 0.1 part by weight of antimony oxide was added and the temperature was further increased to 240°C for transesterification reaction. Upon reaching 240°C, trimethyl phosphate was added to inactivate the transesterification reaction catalyst, and 31.3 parts by weight of the organic-modified laminar silicate prepared in Reference Example 1 was added thereto.

Next, the temperature was increased to 290°C and a high vacuum of no greater than 1 mmHg was created for polycondensation reaction to obtain a polyester resin composition with a reduced viscosity of 0.72 (dL/g).

The terminal OH content of the obtained composition was 30 eq/ton, the COOH content was 62 eq/ton and the inorganic ash content was 10 wt%. The interlayer distance $d_A$ measured by X-ray diffraction was 2.7 nm, and the average number of layers $N_A$ was 6.3. No laminar silicate peak assigned to an interlayer distance of less than 2 nm in X-ray diffraction was observed. Also, no other laminar silicate peaks assigned to insufficient reaction were observed.

Example 2

There were reacted 25 parts by weight of dimethyl 2,6-naphthalenedicarboxylate and 15 parts by weight of ethylene glycol while gradually heating from 180°C to 200°C, using 0.01 part by weight of manganese acetate as the transesterification reaction catalyst, and then 0.01 part by weight of antimony oxide was added and the temperature was further increased to 240°C for transesterification reaction. Upon reaching 240°C, trimethyl phosphate was added to inactivate the transesterification reaction catalyst, and a slurry comprising 3.8 parts by weight of the organic-modified laminar silicate prepared in Reference Example 1 and 22.4 parts by weight of ethylene glycol (hereinafter abbreviated as EG) was added thereto. Next, the temperature was increased to 290°C and the polycondensation reaction was done, under a high vacuum of no greater than 1 mmHg, to obtain a polyester resin composition with a reduced viscosity of 0.91 (dL/g).

The terminal OH content of the obtained composition was 7.6 eq/ton, the COOH content was 11.2 eq/ton and the inorganic ash content was 10 wt%. The interlayer distance $d_A$ measured by X-ray diffraction was 2.7 nm, and the average number of layers $N_A$ was 5.5.

Example 3

There were reacted 30 parts by weight of dimethyl 2,6-naphthalenedicarboxylate and 18 parts by weight of ethylene glycol while gradually heating from 180°C to 200°C, using 0.02 part by weight of manganese acetate as the

transesterification reaction catalyst, and then 0.02 part by weight of antimony oxide was added and the temperature was further increased to 240°C for transesterification reaction. Upon reaching 240°C, trimethyl phosphate was added to inactivate the transesterification reaction catalyst, and a slurry comprising 0.85 part by weight of the organic-modified laminar silicate prepared in Reference Example 1 and 5.6 parts by weight of ethylene glycol was added thereto.

Next, the temperature was increased to 290°C and the polycondensation reaction was done, under a high vacuum of no greater than 1 mmHg, to obtain a polyester resin composition with a reduced viscosity of 1.24 (dL/g).

The terminal OH content of the obtained composition was 3.9 eq/ton, the COOH content was 7.3 eq/ton and the inorganic ash content was 2 wt%. The interlayer distance $d_A$ measured by X-ray diffraction was 2.7 nm, and the average number of layers $N_A$ was 5.0.

Example 4

There were reacted 30 parts by weight of dimethyl 2,6-naphthalenedicarboxylate and 14.5 parts by weight of ethylene glycol while gradually heating from 180°C to 200°C, using 0.009 part by weight of manganese acetate as the transesterification reaction catalyst, and then 0.0072 part by weight of antimony oxide was added and the temperature was further increased to 240°C for transesterification reaction. Upon reaching 240°C, 0.0277 parts by weight of trimethyl phosphate was added to inactivate the transesterification reaction catalyst, and a slurry comprising 0.850 part by weight of the organic-modified laminar silicate prepared in Reference Example 1 and 5.6 parts by weight of ethylene glycol was added thereto.

Next, the temperature was increased to 290°C and the polycondensation reaction was done, under a high vacuum of no greater than 1 mmHg, to obtain a polyester resin composition with a reduced viscosity of 0.89 (dL/g).

The terminal OH content of the obtained composition was 17.7 eq/ton, the COOH content was 27.4 eq/ton and the inorganic ash content was 2 wt%. The interlayer distance $d_A$ measured by X-ray diffraction was 2.7 nm, and the average number of layers $N_A$ was 5.0.

Example 5

A corotating twin-screw extruder (ZSK25) was used for extrusion of 600 parts by weight of poly(ethylene-2,6-naphthalenedicarboxylate pellets with a reduced viscosity of 0.78 (dL/g) and 150 parts by weight of the polyester resin composition obtained in Example 1, and kneading was performed at a temperature of 280°C, a screw rotation rate of 280 rpm, a discharge rate of 10 kg/hr and a shear rate of 1800/sec to obtain a polyester resin composition with a reduced viscosity of 0.68 (dL/g). The terminal OH content of the obtained composition was 15.3 eq/ton, the terminal COOH content was 36.3 eq/ton and the inorganic ash content was 2 wt%. The interlayer distance $d_B$ measured by X-ray diffraction was 2.8 nm, and the average number of layers $N_B$ was 4.4. Also, no other laminar silicate peaks assigned to insufficient reaction were observed. The polyester resin composition was also observed with a transmission electron microscope (Fig. 1).

As shown in the photograph, the laminar silicate was highly dispersed.

Example 6

A corotating twin-screw extruder (ZSK25) was used to obtain a polyester resin composition in the same manner as Example 5, except that only the polyester resin composition obtained in Example 4 was used and no polyethylene naphthalate was added. The terminal OH content of the obtained composition was 9.8 eq/ton, the COOH content was 34.5 eq/ton, the reduced viscosity was 0.71 (dL/g) and the inorganic ash content was 2 wt%. The interlayer distance $d_B$ measured by X-ray diffraction was 2.7 nm, and the average number of layers $N_B$ was 3.5. The resin composition was also observed by a transmission electron microscope (Fig. 2).

As shown in the photograph, the dispersion rate of the laminar silicate was extremely high. Also, the laminar silicate was further exfoliated.

Example 7

A corotating twin-screw extruder (ZSK25) was used to obtain a polyester resin composition in the same manner as Example 5, except for using 300 parts by weight of poly(ethylene-2,6-naphthalenedicarboxylate) pellets with a reduced viscosity of 0.78 (dL/g) and 100 parts by weight of the polyester resin composition obtained in Example 4. The terminal OH content of the obtained composition was 31.4 eq/ton, the COOH content was 37.7 eq/ton, the reduced viscosity was 0.72 (dL/g) and the inorganic ash content was 0.5 wt%. The interlayer distance $d_B$ measured by X-ray diffraction was 2.7 nm, and the average number of layers $N_B$ was 3.2. The resin composition was also observed by a transmission electron microscope (Fig. 3).

As shown in the photograph, the dispersion rate of the laminar silicate was extremely high. Also, the laminar silicate was further exfoliated.

Examples 8-10

The polyester resin compositions obtained in Examples 5-7 were dried at 180°C for 5 hours and then extruded at 300°C, and sent through a 1.3 mm-slit die for extrusion onto a rotating cooling drum with a surface temperature of 80°C, to obtain an unoriented film. The unoriented film obtained in this manner was drawn to a drawing ratio of 4 in both the machine direction and the direction orthogonal thereto at a temperature of 150°C, to obtain a biaxially oriented film with a thickness of 15 μm. The obtained biaxially oriented film was heat set to a fixed length at 205°C for 1 minute to obtain a polyethylene naphthalate/laminar silicate composite film. The physical properties of the obtained film are shown in Table 1. Fig. 4 shows an electron microscope photograph of the film obtained in Example 10.

Comparative Example 1

A polyethylene-2,6-dicarboxynaphthalate resin containing no laminar silicate (terminal OH content: 52.8 eq/ton, COOH content: 28.8 eq/ton, reduced viscosity: 0.80 dL/g) was melted and discharged by the same method as in Example 6. The terminal OH content of the obtained polyester was 53.9 eq/ton, the COOH content was 35.2 eq/ton and the reduced viscosity was 0.72 dL/g.

Comparative Example 2

A oriented film was obtained under the same conditions as in Example 8, except that the polyethylene naphthalate resin of Comparative Example 1 was used instead of the polyester resin composition obtained in Example 5. The results are shown in Table 1.

Table 1

| | Inorganic ash (Wt%) | Surface roughness (nm) | Elastic modulus | | Average number of layers Nc |
|---|---|---|---|---|---|
| | | | MD direction (MPa) | TD direction (MPa) | |
| Example 8 | 2 | 22.1 | 7168 | 7703 | 2.8 |
| Example 9 | 2 | 19.8 | 7242 | 8365 | 2.9 |
| Example 10 | 0.5 | 19.4 | 6788 | 6179 | 2.7 |
| Comp. Ex. 2 | 0 | 17 | 6032 | 5304 | - |

Reference Example 2

After placing 85 parts by weight of potassium phthalimide, 1008 parts by weight of 1,10-dibromodecane and 430 parts by weight of dimethylformamide (thoroughly dewatered) in a flask, the mixture was stirred and heated at 100°C for 20 hours. After heating, all of the volatile components were removed and the residue was extracted with xylene. Distillation of the volatile components from the extracted solution and crystals of phthalimidodecamethyleneimidazolium bromide was yielded by standing residue at room temperature.

Reference Example 3

After placing 20 parts by weight of trioctylphosphine and 20 parts by weight of the phthalimidodecamethyleneimidazolium bromide obtained in Reference Example 2 in a flask and stirring, the mixture was reacted with stirring at about 100°C for 8-10 hours to obtain N-phthalimidodecamethylene-trioctylphosphonium bromide.

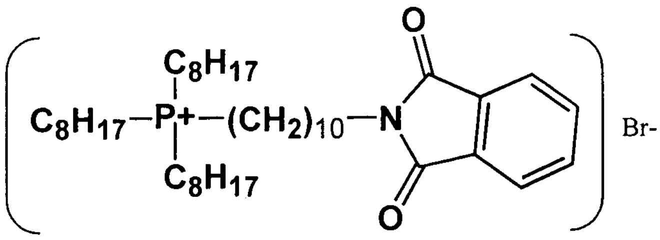

Next, 100 parts by weight of KUNIPIA F, 3000 parts by weight of water and 500 parts by weight of methanol were placed in a flask and heated with stirring at 80°C. To this there was added a solution of 120 parts by weight of N-phthalimidodecamethylene-trioctylphosphonium bromide dissolved in 300 parts by weight of methanol, and the mixture was further stirred at 80°C for 3 hours. The solid portion was filtered from the mixture and rinsed 3 times with methanol and 3 times with water, to obtain a cation-exchanged laminar silicate. The cation exchange rate was 65%, the thermal decomposition temperature was 374°C, and the interlayer distance was 247 nm.

Reference Example 4

After placing 109 parts by weight of KUNIPIA F and 3000 parts by weight of water in a separable flask, the mixture was heated with stirring at 80°C. In a separate reactor there was dissolved 141 parts by weight of ammonium acetate in 300 parts by weight of ion-exchanged water to produce a solution, and this was added to the laminar silicate dispersion. The mixture was then stirred for about 2 hours and the precipitate was filtered out.

In a separate reactor there was dissolved 77 parts by weight of ammonium acetate in 2000 parts by weight of ion-exchanged water to produce a solution. The aforementioned filtered precipitate was added to this solution and after approximately one more hour of stirring, it was filtered. The procedure thereafter was repeated again, and was followed by rinsing three times with 1500 parts by weight of ion-exchanged water. Also, 200 parts by weight of sodium chloride was dissolved in 2000 parts by weight of ion-exchanged water (i.e. a 1.7 M solution concentration), and the filtered precipitate was placed in the solution and stirred for about one hour at a temperature of 80°C. The mixture was then processed with a centrifugal separator and the supernatant was discarded. This procedure was carried out twice. Next, a solution of 83 parts by weight of n-hexadecyltri-n-butylphosphonium bromide in 300 parts by weight of water was added thereto, and the mixture was further stirred for 3 hours at 80°C. The solid portion was filtered out from the mixture and rinsed 3 times with methanol and 3 times with water, after which it was freeze-dried to obtain a cation-exchanged laminar silicate. The ion-exchange rate was 84%. The product obtained in this manner was freeze-dried from an aqueous dispersion with a solid content of 20 wt% to obtain an ion-exchanged laminar silicate with a specific surface area ratio of 6.5 $m^2/g$. Fluorescent X-ray analysis confirmed elimination of calcium, and the calcium content was less than 0.1% as the elemental proportion.

Example 11

Next, poly(ethylene-2,6-naphthalenedicarboxylate) (reduced viscosity = 0.78 dL/g) pellets and the laminar silicate obtained in Reference Example 4 were kneaded using a corotating twin-screw extruder (ZSK-25 by Werner Co.) at an extrusion temperature of 280°C, a discharge rate of 10 kg/hr and a screw rotation rate of 280 rpm, to obtain a polyester resin composition. The terminal OH content of the obtained composition was 30 eq/ton, the COOH content was 48 eq/ton and the inorganic ash content was 2 wt%. The physical properties of the obtained polyester resin composition are shown below in Table 2. Upon observing the resin composition with a transmission electron microscope, the laminar silicate clearly had no coarse aggregates and showed satisfactory dispersion. TEM/EDS measurement detected no calcium.

Example 12

The modifying agent for the laminar silicate of Example 11 was changed to the phosphonium salt obtained in Reference Example 3 and the same procedure was carried out to obtain an organic-modified laminar silicate, for production of a polyester resin composition. The physical properties of the obtained polyester resin composition are shown in Table 2.

Reference Example 5

A cation-exchanged laminar silicate was obtained in the same manner as Reference Example 4, except that no step of placing the filtered product in an aqueous sodium chloride solution, stirring and removing the supernatant was carried out. The ion-exchange rate was 82%. The specific surface area ratio of the product obtained in this manner was 7.0 $m^2/g$. The results of fluorescent X-ray analysis revealed a calcium elemental proportion of less than 0.1%.

Example 13

Poly(ethylene-2,6-naphthalenedicarboxylate) (reduced viscosity = 0.78 dL/g) and the laminar silicate obtained in Reference Example 5 were kneaded using a corotating twin-screw extruder (ZSK-25 by Werner Co.) at an extrusion temperature of 280°C, a discharge rate of 10 kg/hr and a screw rotation rate of 280 rpm, to obtain a polyester resin composition. The terminal OH content of the obtained composition was 28 eq/ton, the COOH content was 53 eq/ton and the inorganic ash content was 2 wt%. The physical properties of the obtained polyester resin composition are shown below in Table 2.

Table 2

| | | Example 11 | Example 12 | Example 13 |
|---|---|---|---|---|
| Laminar silicate | Laminar silicate | KUNIPIA F | KUNIPIA F | KUNIPIA F |
| | Aliphatic ammonium salt treatment | + | + | + |
| | Alkali metal salt treatment | + | + | - |
| | Modifying agent | n-hexadecyltri-n-butylphosphonium bromide | N-phthalimido-decamethylene-trioctylphosphonium bromide | n-hexadecyltri-n-butylphosphonium bromide |
| | Interlayer distance (nm) | 2.74 | 2.41 | 2.76 |
| | Cation exchange rate (%) | 84 | 68 | 82 |
| | the specific surface area ratio ($m^2/g$) | 6.5 | 10 | 7 |
| | Calcium elemental proportion (%) | <0.1 | <0.1 | <0.1 |
| Polyester resin composition | Polyester | PEN | PEN | PEN |
| | Inorganic ash content (wt%) | 2 | 2 | 2 |
| | Melting point (°C) | 268 | 268 | 270 |
| | Terminal OH content (eq/ton) | 30 | 35 | 28 |
| | Terminal COOH content (eq/ton) | 48 | 50 | 53 |

Example 14

The strand-like chips obtained in Example 11 were dried at 170°C for 5 hours and then supplied to an extrusion hopper for melting at a melting temperature of 300°C, and then the melt was passed through a 1.3 mm slit die and extruded onto a rotating cooling drum with a surface temperature of 80°C to obtain an unoriented film. The unoriented film obtained in this manner was subjected to simultaneous biaxial stretching at MD $\times$ TD = 4.0 $\times$ 4.0 at a temperature of 150°C to obtain a biaxially oriented film with a thickness of 15 μm. The obtained biaxially oriented film was heat set

at 205°C for 1 minute to obtain a poly(ethylene-2,6-naphthalenedicarboxylate)/laminar silicate composite film. The physical properties of the obtained film are shown in Table 3.

Table 3

| | Example 14 |
|---|---|
| Resin | Example 11 resin |
| Drawing ratio (MD×TD) | 4×4 |
| Young's modulus (Gpa, MD direction) | 8.2 |
| Center surface roughness (nm) | 25 |
| Orientation factor (Fc) | 0.86 |

Reference Example 6

After adding 1.5 kg of KUNIPIA F (interlayer distance: 1.26 nm, H(QUARTZ)/H(CLAY) = 0.081) in 40 L of ion-exchanged water, it was dispersed at 80°C to obtain a dispersion. The precipitate was removed therefrom with a centrifugal separator and the supernatant was recovered. Upon drying a sampled portion, the concentration of the laminar silicate in the dispersion was found to be 2.5 wt%.

The obtained dispersion was heated and stirred at 80°C while adding a solution comprising n-hexadecyltri-n-butylphosphonium bromide at 1.5 mole equivalents with respect to the ion-exchange capacity of the dispersion and ion-exchanged water at 3 times by weight with respect to the organic phosphonium salt, and the mixture was further stirred for 3 hours at 80°C. The solid portion was filtered out from the mixture and rinsed 3 times with methanol and 3 times with water, after which it was freeze-dried to obtain a cation-exchanged laminar silicate. The physical properties of laminar silicates modified with each organic phosphonium ion are shown in Table 4. The obtained organic-modified laminar silicates were satisfactorily modified with organic phosphonium ion, with the quartz eliminated.

Reference Example 7

A dispersion prepared by the same method as in Reference Example 6 was allowed to stand for one week at 23°C and then the supernatant was recovered. Upon drying a sampled portion, the concentration of the laminar silicate in the dispersion was found to be 2.8 wt%. A cation-exchanged laminar silicate was obtained in the same manner as Reference Example 6. The physical properties of the laminar silicates modified with each organic phosphonium ion are shown in Table 4.

Reference Example 8

A dispersion prepared by the same method as in Reference Example 6 was dispersed using a bead mill. After eliminating the precipitate by decantation, it was passed through a 5 μm filter to eliminate the coarse particles and obtain an aqueous dispersion. The concentration was 3.2 wt%. A cation-exchanged laminar silicate was obtained in the same manner as Reference Example 6. The physical properties of the laminar silicates modified with each organic phosphonium ion are shown in Table 4.

Table 4

| | Quartz content in laminar silicate (wt%) | Percent modification (%) | Interlayer distance (nm) | rNumber of layers |
|---|---|---|---|---|
| Reference Example | 60.10 | 91.3 | 2.3 | 4.7 |
| Reference Example | 70.12 | 76.4 | 2.2 | 6.6 |
| Reference Example | 80.41 | 83.8 | 2.4 | 4.0 |

Examples 15-17

After drying poly(ethylene-2,6-naphthalate) (reduced viscosity: 0.78 g/dL) at 180°C for 6 hours, it was supplied

to an extruder and melted at 280°C, and the laminar silicates modified with organic phosphonium obtained in Reference Examples 7-9 were each supplied from a feeder for melt kneading to obtain polyester resin compositions comprising 2 wt% inorganic ash. The physical properties of the obtained polyester resin composition are shown in Table 5.

Table 5

| | Example 15 | Example 16 | Example 17 |
|---|---|---|---|
| Laminar silicate | Reference Example 6 | Reference Example 7 | Reference Example 8 |
| Reduced viscosity (dL/g) | 0.6 | 0.67 | 0.65 |
| Quartz wt% | 0.002 | 0.002 | 0.008 |
| Terminal OH content (eq/ton) | 35 | 28 | 30 |
| Terminal COOH content (eq/ton) | 53 | 62 | 42 |

Examples 18-20

The polyester resin compositions obtained in Examples 15-17 were dried at 180°C for 5 hours and then melted at 300°C, and sent through a 1.3 mm-slit die for extrusion onto a rotating cooling drum with a surface temperature of 80°C, to obtain unoriented films. Each unoriented film obtained in this manner was drawn to a drawing ratio of 4 in both the machine direction and the direction orthogonal thereto at a temperature of 150°C, to obtain a biaxially oriented film with a thickness of 15 μm. The obtained biaxially oriented film was heat set to a fixed length at 205°C for 1 minute to obtain a polyethylene naphthalate/laminar silicate composite film. The physical properties of the obtained films are shown in Table 6.

Table 6

| | Example 18 | Example 19 | Example 20 |
|---|---|---|---|
| Resin composition | Example 15 | Example 16 | Example 17 |
| Surface roughness (nm) | 34.3 | 24.1 | 22.1 |
| Number of layers (Nc) | 3.5 | 3.8 | 3.3 |
| Orientation factor (Fc) | 0.87 | 0.86 | 0.88 |
| Elastic modulus (kg/mm$^2$) | 7200 | 7900 | 7400 |

Example 21

After placing 250 parts by weight of 2,6-bis(hydroxyethyl)naphthalenedicarboxylate, 21 parts by weight of the laminar silicate obtained in Reference Example 3 and 0.04 parts by weight of antimony trioxide in a flask, the temperature was raised from 230°C to 290°C over a period of 2 hours while stirring under conventional pressure. Next, the pressure was reduced from atmospheric pressure to 66.66 Pa over a period of one hour at 290°C, and polymerization was conducted for one hour to obtain a composition comprising poly(ethylene-2,6-naphthalenedicarboxylate) and a laminar silicate (weight ratio of poly(ethylene-2,6-naphthalenedicarboxylate) and inorganic components = 100:7). The melting point of the composition was 265°C, and the reduced viscosity was 0.54 dL/g. The obtained composition had a terminal OH content of 22 eq/ton and a COOH content of 35 eq/ton. The interlayer distance $d_A$ measured by X-ray diffraction was 2.6 nm, and the average number of layers $N_A$ was 6.2. No laminar silicate peak assigned to an interlayer distance of less than 2 nm in X-ray diffraction was observed. Also, no other laminar silicate peaks assigned to insufficient reaction were observed.

A twin-screw extruder was used for melt kneading of 860 parts by weight of the composition obtained by this procedure and 2240 parts by weight of poly(ethylene-2,6-naphthalate) (reduced viscosity: 0.78 g/dL) at a melt temperature of 300°C. The interlayer distance $d_B$ measured by X-ray diffraction was 2.6 nm, and the average number of layers $N_B$ was 5.2.

The obtained composition was formed into a filament using a spinning apparatus having a spinning nozzle diameter of 0.3 mm at a speed of 33 m/min and a melt temperature of 300°C, and drawn to a drawing ratio of 7.9 at 150°C. The size of the obtained filament was 6.6 dtex, the fiber strength was 6.0 cN/dtex and the Young's modulus was 31 gPa. The interlayer distance $d_c$ measured by X-ray diffraction was 2.7 nm, and the average number of layers $N_c$ was

4.4. The physical properties of the obtained fiber are shown in Table 7.

Example 22

Upon carrying out the same procedure as in Example 21 except for a fiber drawing temperature of 160°C, the size of the obtained filament was 6.6 dtex, the fiber strength was 5.296 cN/dtex and the Young's modulus was 29 gPa. The physical properties of the obtained fiber are shown in Table 7.

Example 23

Upon carrying out the same procedure as in Example 21 except for using the laminar silicate obtained in Reference Example 4 instead of the laminar silicate obtained in Reference Example 3, the size of the obtained filament was 6.4 dtex, the fiber strength was 5.4 cN/dtex and the Young's modulus was 31 gPa. The physical properties of the obtained fiber are shown in Table 7.

Example 24

Upon carrying out the same procedure as in Example 21 except for using the laminar silicate obtained in Reference Example 6 instead of the laminar silicate obtained in Reference Example 3, the size of the obtained filament was 6.7 dtex, the fiber strength was 5.3 cN/dtex and the Young's modulus was 28 gPa. The physical properties of the obtained fiber are shown in Table 7.

Comparative Example 3

A poly(ethylene-2,6-naphthalate) filament was obtained in the same manner as Example 21, except that poly (ethylene-2,6-naphthalate) containing no laminar silicate (terminal OH content: 52.8 eq/ton, COOH content: 28.8 eq/ton, reduced viscosity: 0.78 g/dL) was used, and the drawing ratio was 8.8. The size of the obtained filament was 5.39 dtex, the fiber strength was 5.825 cN/dtex and the Young's modulus was 28 gPa. The physical properties of the obtained fiber are shown in Table 7.

Comparative Example 4

A poly(ethylene-2,6-naphthalate) filament was obtained in the same manner as Example 22, except that poly (ethylene-2,6-naphthalate) (terminal OH content: 52.8 eq/ton, COOH content: 28.8 eq/ton, reduced viscosity: 0.78 g/dL) was used, and the drawing ratio was 8.8. The size of the obtained filament was 5.28 dtex, the fiber strength was 5.913 cN/dtex and the Young's modulus was 27 gPa. The physical properties of the obtained fiber are shown in Table 7.

Table 7

| | Example 21 | Example 22 | Example 23 | Example 24 | Comp. Ex.3 | Comp. Ex.4 |
|---|---|---|---|---|---|---|
| Laminar silicate | Reference Example | Reference 3Example | Reference 3Example | Reference 4 Example | 6 None | None |
| Terminal OH content (eq/ton) | 22 | 22 | 30 | 35 | 52.8 | 52.8 |
| Terminal COOH content (eq/ton) | 35 | 36 | 48 | 53 | 28.8 | 28.8 |
| Interlayer distance $d_A$ | 2.6 | 2.6 | 2.4 | 2.4 | - | - |
| Average number of layers $N_A$ | 6.2 | 6.1 | 6 | 4.8 | - | - |

(continued)

| | Example 21 | Example 22 | Example 23 | Example 24 | Comp. Ex.3 | Comp. Ex.4 |
|---|---|---|---|---|---|---|
| Interlayer distance $d_B$ | 2.6 | 2.5 | 2.5 | 2.4 | - | - |
| Average number of layers $N_B$ | 5.2 | 5.3 | 5.6 | 4.2 | - | - |
| Interlayer distance $d_C$ | 2.7 | 2.7 | 2.4 | 2.5 | - | - |
| Average number of layers $N_C$ | 4.4 | 4.5 | 4.1 | 3.8 | - | - |
| Fiber size (dtex) | 6.6 | 6.6 | 6.4 | 6.7 | 5.39 | 5.28 |
| Fiberstrength (cN/dtex) | 6 | 5.296 | 5.4 | 5.3 | 5.825 | 55.913 |
| Young's modulus (GPa) | 31 | 29 | 31 | 28 | 28 | 27 |

**Claims**

1. A polyester resin composition which is a resin composition comprising a polyester and a laminar silicate that is 60-100% modified by an organic phosphonium ion represented by formula (1) below, wherein the content of said laminar silicate is 0.01-20 wt% as inorganic ash and the terminal OH group content is 0.1-45 eq/ton.

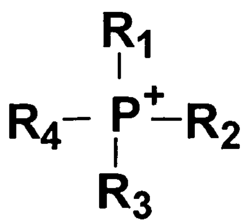

(1)

(wherein $R_1$, $R_2$, $R_3$ and $R_4$ each independently represent a C1-30 hydrocarbon group or a hetero atom-containing hydrocarbon group, and any from among $R_1$, $R_2$, $R_3$ and $R_4$ may form a ring.)

2. A polyester resin composition according to claim 1, wherein the polyester is one or more selected from the group consisting of polyethylene terephthalate, polytrimethylene terephthalate, polybutylene terephthalate and polyethylene-2,6-naphthalate.

3. A polyester resin composition according to claim 1, **characterized in that** the temperature for 5% weight loss of the laminar silicate modified with an organic phosphonium ion as measured with a Thermo Gravimetric Analysis at a temperature-elevating rate of 20°C/min in a nitrogen atmosphere is 310°C or higher.

4. A polyester resin composition according to claim 1, which comprises at least 50% of a laminar silicate with an interlayer distance $d_B$ of 2.0 nm or greater calculated from the X-ray diffraction peak, and wherein the average number of layers $N_B$ of the laminar silicate calculated by the Scherrer formula based on the line diffraction peak and its full width of half maximum intensity is no greater than 5.

**5.** A polyester resin composition according to claim 1, **characterized in that** the calcium content of the laminar silicate is no greater than 0.5% as the elemental proportion measured by fluorescent X-ray analysis.

**6.** A polyester resin composition according to claim 1, **characterized in that** the quartz content is no greater than 0.009 wt%.

**7.** A molded article composed of a polyester resin composition according to claim 1.

**8.** A molded article according to claim 7, which is a film.

**9.** A molded article according to claim 8, wherein the diffraction peak intensity between layers of the laminar silicate in X-ray diffraction in the cross-sectional direction of the film is such that the orientation factor fc in formula (5) below is no greater than 0.8.

$$fc = \frac{3 < \cos^2 \phi > c - 1}{2}, \quad < \cos^2 \phi > c = \frac{\int_0^{\pi/2} Ic(\phi) \cos^2 \phi \sin \phi \, d\phi}{\int_0^{\pi/2} Ic(\phi) \sin \phi \, d\phi} \quad (5)$$

(wherein fc is the orientation factor, φ is the declination in the in-plane direction of the film, and Ic(φ) is the diffraction intensity for the declination φ)

**10.** A molded article according to claim 7, which is a fiber.

**11.** A molded article according to claim 7, wherein the average number of layers $N_c$ of the laminar silicate is no greater than 5, as calculated by the Scherrer formula from the line diffraction peak and its full width of half maximum intensity.

**12.** A process for production of a polyester resin composition according to claim 1, **characterized by** production with a step of (A) polymerization of a dicarboxylic acid or its ester derivative with an aliphatic glycol, and/or a hydroxycarboxylic acid in the presence of a laminar silicate that has been ion-exchanged with an organic phosphonium ion to 60-100% with respect to the ion exchange capacity, to obtain a polyester resin composition with a laminar silicate content of 0.01-30 parts by weight with respect to 100 parts by weight of the polyester, and a step of (B) melt-kneading at a shear rate of 250/s or greater at a temperature above the melting point of the polyester.

**13.** A process for production of a polyester resin composition according to claim 12, wherein the polyester resin composition containing the laminar silicate obtained by polymerization step (A) comprises at least 50% of a laminar silicate with an interlayer distance $d_A$ of 2.0 nm or greater calculated from the X-ray diffraction peak, and the average number of layers $N_A$ of the laminar silicate calculated by the Scherrer formula based on the line diffraction peak and its full width of half maximum intensity is no greater than 7.

Fig. 1

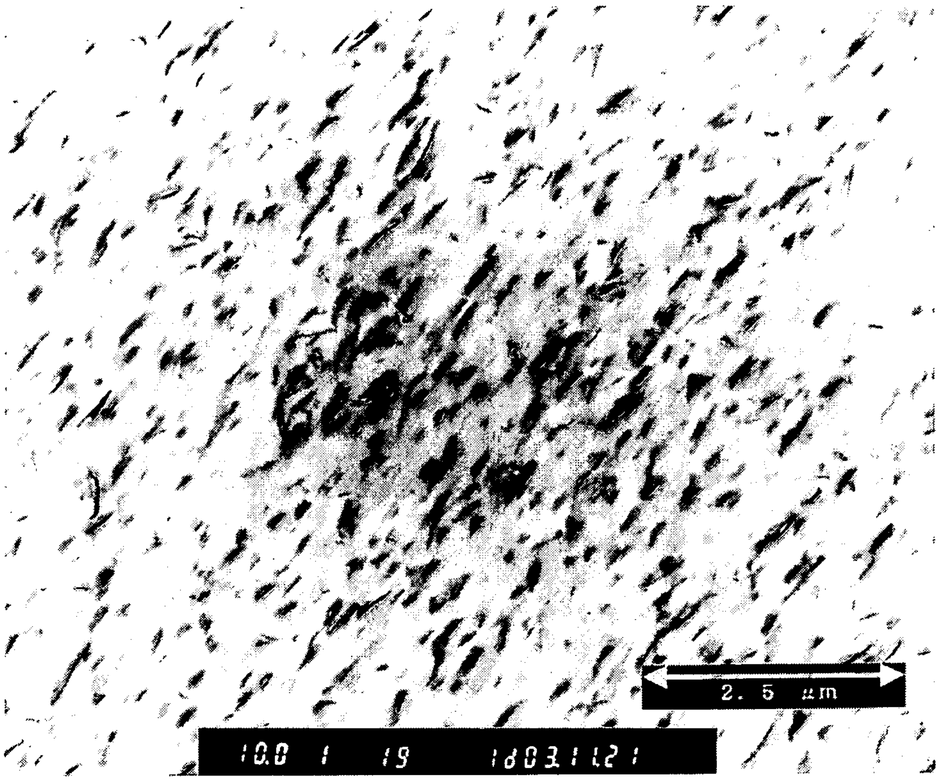

Fig. 2

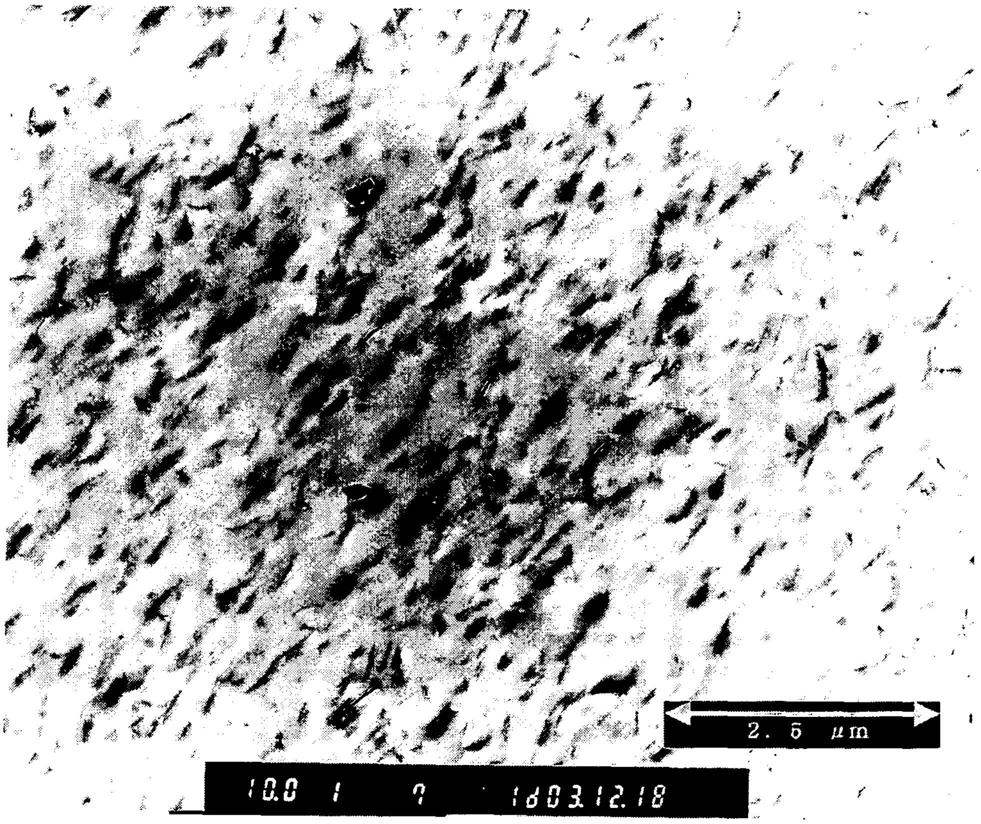

Fig. 3

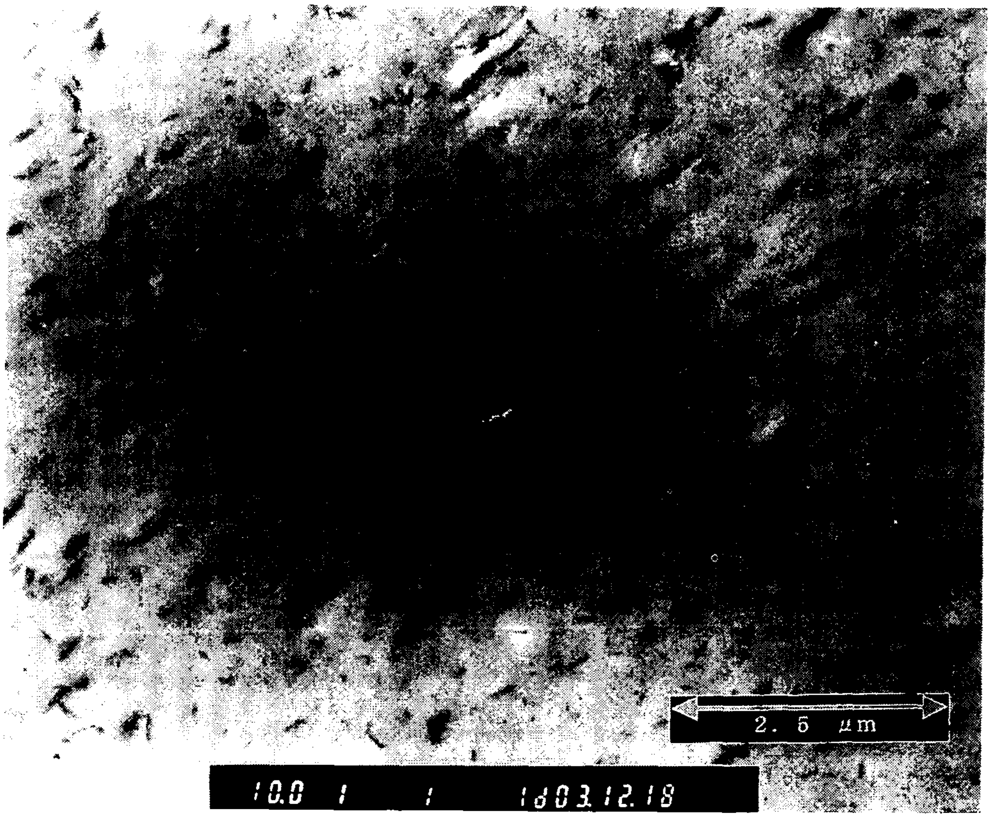

Fig. 4

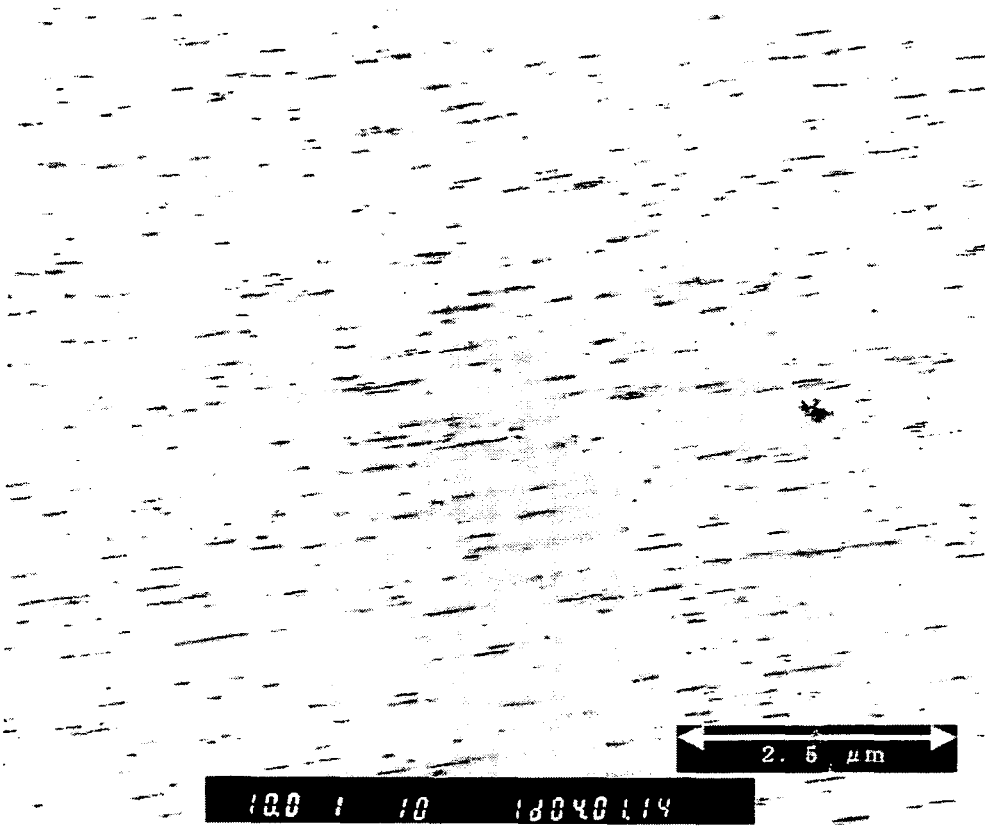

**INTERNATIONAL SEARCH REPORT**

International application No.
PCT/JP2005/004142

A. CLASSIFICATION OF SUBJECT MATTER
Int.Cl[7] C08L67/02, C08K9/04, D01F6/92

According to International Patent Classification (IPC) or to both national classification and IPC

B. FIELDS SEARCHED

Minimum documentation searched (classification system followed by classification symbols)
Int.Cl[7] C08L67/00-67/02

Documentation searched other than minimum documentation to the extent that such documents are included in the fields searched

| | | | |
|---|---|---|---|
| Jitsuyo Shinan Koho | 1926-2005 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-12899 A (Teijin Kasei Kabushiki Kaisha), 15 January, 2003 (15.01.03), Claims 1, 7, 9; Par. No. [0047] (Family: none) | 1-13 |
| A | JP 2002-121397 A (Sekisui Chemical Co., Ltd.), 23 April, 2002 (23.04.02), Claims 1, 3; Par. No. [0023] (Family: none) | 1-13 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 March, 2005 (25.03.05) | 12 April, 2005 (12.04.05) |
| Name and mailing address of the ISA/ Japanese Patent Office | Authorized officer |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000053847 A
- JP 2001261947 A


### Non-patent literature cited in the description


- **NAKAJO, K.** The World of Nanocomposites. Kogyo Chosakai, 2000